# EUROPÄISCHE PATENTSCHRIFT

(11) **EP 2 028 632 B1**
(45) Veröffentlichungstag und Bekanntmachung des Hinweises auf die Patenterteilung: **02.06.2010**
(21) Anmeldenummer: 08014808.3
(22) Anmeldetag: 21.08.2008
(51) Int. Cl.: B60W 30/16, G08G 1/16, B60W 30/08

(54) **Verfahren zur automatischen Längsführung eines Kraftfahrzeugs mittels eines längsführenden Fahrerassistenzsystems mit Stop&Go-Funktion**
Method for automatically linear guidance of a motor vehicle by means of a linear guiding driver assistance system with stop&go functionality
Procédé de guidage longitudinal automatique d'un véhicule automobile à l'aide d'un système d'assistance au conducteur longitudinal ayant la fonction stop&go

(30) Priorität: 21.08.2007 DE 102007039377
(43) Veröffentlichungstag der Anmeldung: 25.02.2009
(73) Patentinhaber: Audi AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- WO-A-2004/021546
- WO-A-2004/111943
- WO-A-2007/033870

## Beschreibung

Die Erfindung betrifft ein Verfahren zur automatischen Längsführung eines Kraftfahrzeugs mittels eines längsführenden Fahrerassistenzsystems mit Stop & Go-Funktion umfassend eine Einrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand gebremst und bei Erfassung der erneuten Anfahrt des vorausfahrenden Fahrzeugs gegebenenfalls in Abhängigkeit eines vom Fahrer über eine Eingabeeinrichtung gebbaren Bestätigungssignals automatisch wieder angefahren wird, wobei zumindest ab dem Zeitpunkt des Stillstands des Kraftfahrzeugs kontinuierlich das Fahrzeugvorfeld mittels einer Überwachungseinrichtung auf etwaige im Fahrzeugvorfeld befindliche Hindernisse überwacht wird.

Kraftfahrzeuge mit einem längsführenden Fahrerassistenzsystem mit Stop & Go-Funktion sind bekannt, beispielsweise aus der WO 2007/033 870 A1 und bieten dem Fahrer die Möglichkeit, das Fahrzeug automatisch über das System abstandsgeregelt führen zu lassen. Das Fahrerassistenzsystem ist mit einer Erfassungseinrichtung ausgestattet, beispielsweise in Form von Radar- oder Lidarsensoren, die das Fahrzeugvorfeld erfassen. Ein Steuergerät des Fahrerassistenzsystems ist anhand der gegebenen Sensorsignale in der Lages ein vorausfahrende Fahrzeug zu erfassen sowie dessen Abstand zum eigenen Kraftfahrzeug zu ermitteln, um in Abhängigkeit dieser Information das eigene Fahrzeug entweder zu beschleunigen, im momentanen Zustand weiterzuführen oder zu bremsen. Bremst das vorausfahrende Fahrzeug, so bremst auch das eigene Kraftfahrzeug, wobei es möglich ist, das eigene Fahrzeug bis in den Stand zu bremsen, wenn auch das vorausfahrende Fahrzeug angehalten hat, wie beispielsweise im Falle eines Auffahrens auf ein Stauende oder dergleichen. Die Wiederanfahrt mit aktiviertem Fahrerassistenzsystem, beispielsweise einem sogenannten "ACC-System" (ACC = adaptiv cruise control) erfolgt üblicherweise derart, dass sich zuerst das Vorderfahrzeug in Bewegung gesetzt haben muss, was über die Erfassungseinrichtung ermittelt wird, wonach der Fahrer über eine Eingabeeinrichtung ein Bestätigungssignal geben muss, damit das eigene Fahrzeug automatisch angefahren werden kann. Es handelt sich also um eine fahrerinitiiertes automatisches Anfahren. Denkbar ist auch grundsätzlich die vollkommen automatisierte Anfahrt ohne Gabe eines Bestätigungssignals.

Jedoch darf ein automatischer Wiederanfahrvorgang aus Sicherheitsgründen nur dann erfolgen, wenn sich zwischen dem eigenen Fahrzeug und dem angefahrenen Vorderfahrzeug kein Hindernis wie beispielsweise ein Fußgänger, ein Fahrradfahrer oder ein Motorradfahrer etc. befindet. Diese Hinderniserkennung kann naheliegender Weise über die ohnehin vorgesehen Umfeldsensorik des Längsführungssystems erfolgen, d.h. diese werden als Überwachungseinrichtung verwendet. Jedoch ist diese Frontumfeldsensorik primär so ausgelegt, dass sie speziell bewegte oder stehende Fahrzeuge erkennt und klassifizieren kann. Die Objekterkennungsalgorithmen sind üblicherweise auf die Erkennung von Objekten für die Fahrzeuglängsregelung oder Fahrerwarnung ausgelegt. Hinsichtlich der Erfassung anderer Objekte wie Fußgänger oder Radfahrer sind die Algorithmen wenig sensitiv, eine Klassifizierung ist mitunter schwierig, so dass unter Umständen ein Hindernis nicht oder zu spät erkannt wird.

Der Erfindung liegt damit das Problem zugrunde, ein Verfahren anzugeben, das eine einfache und sichere Erkennung etwaiger vor dem Fahrzeug befindlicher Hindernisse zulässt.

Die Erfindung ist hinsichtlich des Verfahrens im Anspruch 1 definiert.

Zur Lösung dieses Problems ist bei einem Verfahren der eingangs genannten Art erfindungsgemäß zumindest vorgesehen, dass die Überwachungseinrichtung eine kontinuierlich das Fahrzeugvorfeld zeigende Einzelbilder liefernde Bildaufnahmeeinrichtung umfasst, wobei zur Hinderniserfassung entweder Differenzbilder aus jeweils einem ersten Einzelbild und einem zeitlich danach aufgenommenen zweiten Einzelbild erzeugt und ausgewertet werden, oder wobei zur Hinderniserfassung die Vektoren des optischen Flusses der Bildinformation zumindest eines Teils der Bildpunkte zweier zeitlich nacheinander aufgenommener, sich aus Bildpunkten zusammensetzender Einzelbildern ermittelt und ausgewertet werden.

Das erfindungsgemäße Verfahren schlägt zum einen die Verwendung einer Bildaufnahmeeinrichtung, also eine geeignete Kamera, vor, über die das Fahrzeugvorfeld erfasst wird, und die kontinuierlich das Fahrzeugvorfeld zeigende Einzelbilder liefert. Erfindungsgemäß werden nun die Einzelbilder nicht jeweils separat ausgewertet, um etwaige Objekte darin zu erkennen, beispielsweise unter Verwendung entsprechender Kantendetektionsalgorithmen oder dergleichen. Vielmehr schlägt die Erfindung in einer ersten Ausführungsalternative vor, Differenzbilder zu erzeugen und diese auszuwerten. Ein Differenzbild wird jeweils aus einem ersten Einzelbild und einem zeitlich danach aufgenommenen zweiten Einzelbild erzeugt. Das zweite Einzelbild wird vom ersten Einzelbild subtrahiert. Nachdem es sich bei einer Bildaufnahmeeinrichtung um eine digitale Bildaufnahmeeinrichtung handelt, die bildpixelweise Signale liefert, werden hier also bildpixelweise Signale voneinander subtrahiert. Das Differenzbild ist folglich ein Bild, in dem jeder Bildpixel das jeweilige Subtraktionssignal zeigt. Sind die einzelnen Pixelsignale gleich, ist das Differenzsignal Null, andernfalls entspricht es einem bestimmten Signaldifferenzwert. In jedem Fall können auf diese Weise etwaige Änderungen zwischen zwei zeitlich nacheinander aufgenommenen Einzelbildern ohne weiteres erfasst werden, da jede Änderung in einem Bild in entsprechenden Pixeln andere Signale zur Folge hat, die wiederum zu Signaldifferenzen und damit zu einem Ereignis im Differenzbild führen. Dies bietet also die Möglichkeit, allein anhand des Differenzbilds sofort etwaige Bildänderungen und damit Situationsänderungen vor dem Fahrzeug zu erkennen.

Die Bilder werden zweckmäßigerweise ab Stillstand des eigenen Fahrzeugs aufgenommen, so dass innerhalb dieser Zeit bis zu einer möglichen Wiederanfahrt kontinuierlich etwaige Änderungen und damit etwaige Hindernisse erkannt werden können.

Ergibt die Auswertung eines ermittelten Differenzbilds, dass sich eine Änderung ergeben hat, mithin, dass also ein Hindernis vorhanden sein kann, so wird der automatische Anfahrvorgang nicht gestartet, selbst wenn erfasst wird, dass das Vorderfahrzeug anfährt. Vielmehr bleibt das eigene Kraftfahrzeug solange stehen, bis erkannt wird, dass das Hindernis nicht mehr vorhanden ist, oder bis der Fahrer selbst ein Bestätigungssignal gibt, mithin also die Hinderniserfassung "überstimmt".

Während der Stillstandszeit werden selbstverständlich für eine kontinuierliche oder quasi-kontinuierliche Erfassung mehrere Differenzbilder aus mehreren Einzelbildpaaren erzeugt, um eine sich innerhalb des Überwachungszeitintervalls ergebende Änderung, beispielsweise das Hereinlaufen eines Fußgängers zwischen das eigene und das vordere Fahrzeug, zu erfassen.

Eine zweite Ausführungsalternative sieht die Ermittlung des optischen Flusses der Bildinformation zumindest eines Teils der Bildpunkte zweier zeitlich nacheinander aufgenommener, sich aus Bildpunkten zusammensetzendern Einzelbildern vor. Als optischer Fluss wird in der Bilddatenverarbeitung und in der optischen Messtechnik ein Vektorfeld bezeichnet, das die zweidimensionale Bewegungsrichtung und die zweidimensionale Geschwindigkeit für jeden Bildpunkt bzw. der ihm zugeordneten Bildinformation wiedergibt. Man erhält hier also insbesondere eine Richtungsinformation über den Vektor sowie eine Geschwindigkeitsinformation. Der optische Fluss kann als die auf die Bildebene projizierten Geschwindigkeitsvektoren von im Bild sichtbaren Objekten verstanden werden. Es werden hierbei also die Bewegungen bzw. Veränderungen pixelweiser Bildinformationen zwischen zwei betrachteten Einzelbildern vektoriell erfasst bzw. dargestellt und ausgewertet. Anhand des Vektorfelds bzw. des Vektorverlaufs kann nun erfasst werden, ob eine Bewegung gegeben ist bzw. ob sich ein Hindernis in den überwachten Bereich vor dem Fahrzeug in Querrichtung hineinbewegt. Solange sich das Hindernis also mit einer eine Querkomponente aufweisenden Bewegungsrichtung vor dem Fahrzeug bewegt, können sich verändernde Bildpunkte bzw. Bildpunktinformationen mit einem überwiegend horizontal ausgerichteten Vektorfeld bestimmt und ausgewertet werden. Auf weitere Details bzgl. dieser Ausführungsalternative wird weiter unten eingegangen.

Hinsichtlich der Differenzbilderstellung sind unterschiedliche Ausgestaltungen denkbar. Nach einer ersten Erfindungsalternative kann jedes neu aufgenommene Einzelbild von dem unmittelbar davor aufgenommenen Einzelbild subtrahiert werden. Hier erfolgt also eine kontinuierliche Differenzbilderstellung aus jedem Einzelbild und seinem Vorgängerbild. Um die Rechenleistung etwas zu verringern, wäre es auch denkbar, nur jedes n-te neu aufgenommene Einzelbild, beispielsweise jedes zehnte oder zwanzigste Einzelbild, mit dem unmittelbar davor aufgenommenen Einzelbild zu vergleichen. Bei Bildaufnahmeraten von mehreren Einzelbildern pro Sekunde kann eine hinreichende Hindernisüberwachung ohne weiteres sichergestellt werden, wenn nicht jedes neue Einzelbild, sondern nur eine entsprechende Einzelbildauswahl zur Differenzbilderstellung verwendet wird.

Alternativ zur Differenzbilderstellung aus einem Einzelbild und seinem unmittelbar davor aufgenommenen Vorläuferbild besteht die Möglichkeit, jedes oder jedes n-te neu aufgenommene Einzelbild von einem definierten Vergleichs-Einzelbild zu subtrahieren. Dies kann beispielsweise ein Einzelbild sein, das unmittelbar nach dem Stillstand des eigenen Fahrzeugs aufgenommen wurde, und das für alle Differenzbilderstellungen verwendet wird. Jedes neu aufgenommene oder jedes n-te neu aufgenommene Einzelbild wird also stets vom selben Vergleichs-Einzelbild subtrahiert. Anstelle nur eines definierten Vergleichs-Einzelbild wäre es auch hier denkbar, als wechselndes Vergleichs-Einzelbild jeweils das (n-x)-te Einzelbild zu verwenden. X kann eine beliebige Zahl sein, um die quasi das zu verwendende Vergleichs-Einzelbild bezogen auf das momentan aufgenommene Einzelbild zeitlich gesehen nach vorne verlagert wird. Beispielsweise kann so jedes neu aufgenommene Einzelbild oder jedes n-te aufgenommene Einzelbild jeweils mit dem 20sten oder 50sten oder 100sten zuvor aufgenommenen Vergleichs-Einzelbild subtrahiert werden.

Um zu vermeiden, dass bereits eine einzige Änderung in nur einem Bildpixel anhand des Differenzbilds sofort als Hindernis erkannt wird, sieht eine zweckmäßige Weiterbildung der Erfindung vor, dass ein Differenzbild hinsichtlich der Größe der pixelweisen Signaldifferenzen und der Anzahl der Pixel mit Signaldifferenzen analysiert wird, wobei ein Hindernis dann erkannt wird, wenn eine Mindestanzahl von pixelweisen Signaldifferenzen bei gleichzeitiger Mindestgröße der jeweiligen Signaldifferenz gegeben ist. Die Detektionsschwelle kann noch dadurch optimiert werden, dass ein Hindernis auch nur dann erkannt wird, wenn die entsprechenden Bildpixel zusammenhängen, so dass sich flächige, quasi geschlossene Bildbereiche im Differenzbild ergeben, in denen hinreichende Ereignisse im Differenzbild erfasst werden können. Hierüber wird verhindert, dass schon geringste Helligkeitsschwankungen bzw. Signalschwankungen in einzelnen Pixeln zu Fehlentscheidungen dahingehend, dass ein Hindernis erkannt wird, führen.

Im Hinblick darauf, dass die Bildaufnahmerate und damit letztlich auch die Differenzbilderzeugungsrate relativ groß ist, besteht die Möglichkeit, ein möglicherweise erkanntes Hindernis hinsichtlich seiner Plausibilität zu prüfen. Um dies zu ermöglichen, kann nach einer Weiterbildung der Erfindung jedes Differenzbild mit wenigstens einem, vorzugsweise mehreren zeitlich davor erzeugten Differenzbildern dahingehend verglichen werden, ob die im aktuell erzeugten Differenzbild ermittelten relevanten pixelweisen Signaldifferenzen in den älteren Differenzbildern in vergleichbaren Bildbereichen gegeben sind, wobei ein Hindernis dann erkannt wird, wenn eine einen vorgegebenen Übereinstimmungsgrad übersteigende Übereinstimmung ermittelt wird. Es wird demgemäß also überprüft, ob ein ähnlicher Bildbereich, der im aktuellen Differenzbild ermittelt wird, in einem oder mehreren früher ermittelten Differenzbildern ebenfalls vorhanden ist und zumindest in einem ähnlichen Bildausschnitt angeordnet ist. Hierüber wird sichergestellt, dass auch eine etwaige Hindernisbewegung im Rahmen der Plausibilisierung erfasst wird, wobei eine solche Hindernisbewegung natürlich zu einer Änderung in den jeweiligen Bildern führt, mithin also die entsprechenden Bildabschnitte nicht deckungsgleich sein können, jedoch im Hinblick auf die hohe Differenzbilderzeugungsrate in näherungsweise gleichen Bildabschnitten vorhanden sind.

Im Rahmen der Analyse kann des Weiteren eine Analyse des Pixelbereichs zur Ermittlung einer charakteristischen Form und/oder Ausrichtung des Bereichs im Bild erfolgen. Gemäß dieser Erfindungsausgestaltung wird also der Bildbereich der zusammenhängenden Pixel, die eine hinreichende Signaländerung zeigen, hinsichtlich der Kontur/Ausrichtung analysiert, um aus dieser Information zusätzlich eine Entscheidung dahingehend abzuleiten, dass es sich bei einer erfassten Änderung tatsächlich um ein Hindernis handelt, bzw. um ein solches zu verifizieren. Beispielsweise müssen die Pixelbereiche eine Kontur mit überwiegend vertikaler Ausrichtung haben, wie es sich bei dem Hindernis um einen Fußgänger handelt.

Um zu verhindern, dass bildliche Änderungen der Rückansicht des im jeweiligen Einzelbild gezeigten Hecks des Vorderfahrzeugs, wie beispielsweise ein angehendes Bremslicht oder ein sich bewegender Heckscheibenwischer, zu einer vermeintlichen Hinderniserfassung führen, kann in Weiterbildung der Erfindung in jedem verarbeiteten Einzelbild, sei es ein aktuell aufgenommenes oder ein zeitlich früheres Einzelbild, ein in seiner Bildlage und Form definierter Bildbereich ausgewählt und nur dieser jeweilige Bildbereich der Verarbeitung zugrunde gelegt werden. Dies bietet die Möglichkeit, insbesondere einen Bildbereichsabschnitt, in dem die Silhouette des vorausfahrenden Fahrzeugs gezeigt ist, bei der Verarbeitung der Einzelbilder zur Differenzbilderzeugung nicht zu berücksichtigen. Denkbar ist aber auch, weit entfernte Umgebungsbereiche zeigende Bildausschnitte hierüber zu entfernen bzw. im Rahmen der Verarbeitung zu unterdrücken. Insbesondere die Erfassung des Fahrzeughecks des vorausfahrenden Fahrzeugs kann auf einfache Weise über einen Kantendetektionsalgorithmus oder dergleichen erfolgen.

Neben Änderungen am Fahrzeugheck des vorausfahrenden Fahrzeugs können auch andere Änderungen wie beispielsweise Schlagschatten, die durch in der Nachbarspur vorbeifahrende Fahrzeuge, seien es entgegenkommende oder überholende, in den der Verarbeitung zugrunde zu legenden Bildausschnitt fallen, zu einer möglichen Fehlinterpretation führen. Um auch dies zu verhindern, kann nach einer ersten erfindungsgemäßen Alternative bei Erfassung eines entgegenkommenden oder überholenden anderen Fahrzeugs die Verarbeitung der Einzelbilder unterbrochen und erst nach erfolgter Vorbeifahrt des erfassten Fahrzeugs wieder fortgesetzt werden. Diese Erfassung eines anderen, sich bewegenden Fahrzeugs kann beispielsweise über eine geeignete, insbesondere zur Seite hin arbeitende Sensorik wie z. B. eine Einparksensorik, die in gewisser Weise auch zur Seite sensiert, oder über Sensoren eines Längsführungssystems wie des ACC-Systems oder eines Spurwechselassistenzsystems erfolgen. Sobald ein entgegenkommendes oder überholendes Fahrzeug erfasst wird, kann ermittelt werde, wann sich dieses in einer Position befindet, dass es das aufgenommene Einzelbild beeinflusst, woraufhin entweder die aufgenommenen Einzelbilder gekennzeichnet werden, um im Rahmen der rechnerischen Verarbeitung seitens des Steuergeräts außer acht zu bleiben, oder woraufhin für die jeweilige Zeitdauer keine Einzelbilder aufgenommen werden oder grundsätzlich keine Differenzbilder erzeugt werden.

Schließlich kann die Einzelbildaufnahme und Verarbeitung desselben zur Differenzbilderzeugung sowie deren Auswertung auch dann noch erfolgen, wenn das eigene Kraftfahrzeug wieder angefahren ist, insbesondere bis eine Grenzgeschwindigkeit, z. B. 10 km/h erreicht ist. Dies lässt es zu, etwaige Hindernisse wie beispielsweise Fußgänger, die während des sehr langsam fahrenden Fahrzeugs vor das Fahrzeug laufen, zu erkennen. Insbesondere bei einer Kolonnenfahrt oder bei hohem Verkehrsaufkommen während einer Stadtfahrt "kriecht" das eigene Fahrzeug häufig mit extrem geringer Geschwindigkeit. Es besteht nun die Möglichkeit, in einem Einzelbild vorhandene Objekte beim Wiederanfahren in ihrer Änderung vorauszuberechnen, um anschließend in den nachfolgenden ermittelten Subtraktionsbildern zu prüfen, ob diese Änderungen eintreten, um solche Objekte dann entweder grundsätzlich als Hindernis auszuschließen, wenn sie nicht im Gefahrenbereich sind, oder als echte Hindernisse zu ermitteln. Zu nennen ist hier das Beispiel eines Zebrastreifens, der sich zwischen dem eigenen und dem vorausfahrenden Fahrzeug befindet und der im Einzelbild gezeigt ist. Würde nun das eigene Fahrzeug anfahren, so kommt es zwangsläufig zu einer Änderung in den nachfolgenden Einzelbilden im Bereich des Zebrastreifens, relativ zu welchem sich das eigene Fahrzeug bewegt. Ist nun bekannt, wie sich bei fahrendem eigenen Fahrzeug die Relativlage zwischen Fahrzeug und Zebrastreifen, also dem erfassten Objekt, ändert, und stimmt diese Änderung überein, so kann davon ausgegangen werden, dass es sich nicht um ein Hindernis, sondern um ein stehendes und damit unkritisches Objekt handelt.

In Weiterbildung der zweiten Alternative, im Rahmen der der optische Fluss betrachtet wird, ist vorgesehen, dass der optische Fluss zwischen jedem oder jedem n-ten neu aufgenommenen Einzelbild und dem unmittelbar davor aufgenommenen Einzelbild oder einem definierten Vergleichs-Einzelbild, gegebenenfalls einem (n-x)-ten Einzelbild ermittelt wird. Hier erfolgt also eine kontinuierliche Vektorermittlung bezogen auf jedes Einzelbild und sein Vorgängerbild. Auch bei hohen Bildaufnahmeraten kann die Bewegungsrichtung und die Bewegungsgeschwindigkeit vektoriell sehr exakt abgebildet und das Vektorfeld ermittelt werden. Um die Rechenleistung etwas zu verringern, wäre es auch hier denkbar, nur jedes n-te neu aufgenommene Einzelbild, beispielsweise jedes zehnte oder zwanzigste Einzelbild, mit dem unmittelbar davor aufgenommenen Einzelbild oder einem früheren, quasi als Referenzbild dienenden Vergleichs-Einzelbild zu verarbeiten. Bei Bildaufnahmeraten von mehreren Einzelbildern pro Sekunde kann eine hinreichende Hindernisüberwachung grundsätzlich ohne weiteres sichergestellt werden, denkbar wäre es aber zur Reduzierung der Rechenleistung, wenn nicht jedes neue Einzelbild, sondern nur eine entsprechende Einzelbildauswahl zur Differenzbilderstellung verwendet wird, wodurch sich auch ein hinreichender Unterschied innerhalb der betrachteten Bilder ergibt, was durch einen ausreichenden zeitlichen Abstand zwischen den Bildern sichergestellt werden kann. Als Bildpunktinformationen können solche von Objektkanten ausgewertet werden. Die Kanten können mittels eine Kantendetektionsalgorithmus ermittelt werden. Gerade an solchen Kanten ergeben sich auch bei geringen Bewegungen hinreichende Signalunterschiede, also bewegungsbedingte Bildpunktvariationen, die eine vektorielle Erfassung bzw. eine Vektorfeldermittlung ermöglichen.

Um Fehlauslösungen z.B. durch Schlagschatten etc. vermeiden zu können, sind nach einer zweiten erfindungsgemäßen Alternative den Einzelbildern zwei oder mehr definierte Bildbereiche zugeordnet, in denen die Ermittlung des optischen Flusses erfolgt. Diese Bild- oder Suchbereiche sind zweckmäßigerweise seitenbezogen oder seitenabhängig, sind also bestimmten Bildseiten zugeordnet. Gemäß dieser erfindungsgemäßen Alternative werden ein erster Bildbereich definiert, in dem ein Hindernis dann erkannt wird, wenn die Vektoren des optischen Flusses, von links nach rechts gerichtet sind, und ein zweiter Bildbereich, in dem ein Hindernis dann erkannt wird, wenn die Vektoren des optischen Flusses von rechts nach links gerichtet sind. Entsprechend werden im ersten Bildbereich nur Hindernisse detektiert, die sich von links nach rechts bewegen, da dies zu der beschriebenen Vektorausrichtung in diesem Bildbereich führt, während im zweiten Bildbereich nur sich von rechts nach links bewegende Objekte erkannt werden, was zu der diesem Bildbereich zugeordneten Vektorausrichtung führt.

Ferner kann auch hier ein Bildbereichsabschnitt, in dem die Silhouette des vorausfahrenden Fahrzeugs gezeigt ist, bei der Ermittlung und Auswertung des optischen Flusses nicht berücksichtigt werden. Auch kann bei Erfassung eines entgegenkommenden oder überholenden anderen Fahrzeugs die Verarbeitung der Einzelbilder unterbrochen und erst nach erfolgter Vorbeifahrt des erfassten Fahrzeugs wieder fortgesetzt werden. Schließlich kann die Einzelbildaufnahme und Verarbeitung derselben zur Ermittlung und Auswertung des optischen Flusses auch noch erfolgen, wenn das eigene Kraftfahrzeug wieder angefahren ist, bis eine Grenzgeschwindigkeit erreicht ist.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines Kraftfahrzeugs, geeignet zur Durchführung des erfindungsgemäßen Verfahrens,
- Fig. 2: eine Prinzipdarstellung eines über die Bildaufnahmeeinrichtung erfassten Bildes zur Darstellung des im Rahmen der Hinderniserfassung berücksichtigten Bildbereichs,
- Fig. 3: ein Ablaufschema zur Erläuterung des erfindungsgemäßen Verfahrens, und
- Fig. 4: eine Prinzipdarstellung eines erfassten Bilds zur Darstellung der Hinderniserfassung anhand des ermittelten optischen Flusses.

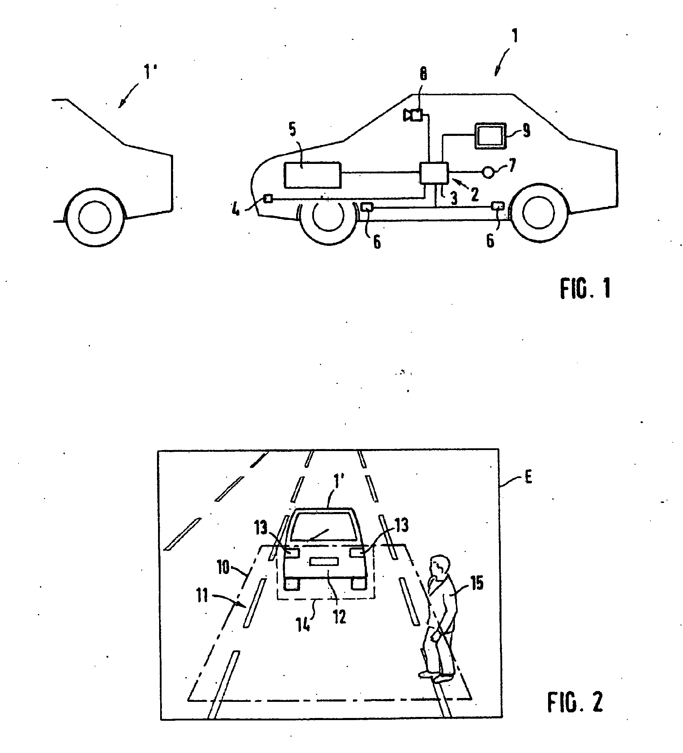

Fig. 1 zeigt ein erfindungsgemäßes Kraftfahrzeug 1, umfassend ein Längsführungssystem 2, beispielsweise ein ACC-System. Dieses umfasst eine Steuerungseinrichtung 3, die mit mehreren an der Fahrzeugfront angeordneten Sensoren 4 kommuniziert. Über die Sensorsignale wird der Abstand zu einem vorausfahrenden Fahrzeug 1' seitens der Steuerungseinrichtung 3 ermittelt. Diese kann nun das eigene Kraftfahrzeug 1 abstandsgeregelt über den Motor/Getriebe 5 beschleunigen bzw. durch Eingriff in das Bremssystem, dargestellt über die Bremseinrichtungen 6, verzögern, oder die Geschwindigkeit beibehalten. Selbstverständlich kommuniziert das Steuergerät 3 mit entsprechenden Steuergeräten des Motors bzw. Getriebes wie auch der Bremsanlage. Bei Fig. 1 handelt es sich lediglich um eine Prinzipskizze, die zur Erläuterung vereinfacht ist.

Nachdem es mittels des Längsführungssystems 2 möglich ist, das Kraftfahrzeug 1 in den Stand zu bremsen, wenn also auch das vorausfahrende Fahrzeug 1' in den Stillstand gebremst hat, und nachdem das eigene Kraftfahrzeug 1 über das Längsführungssystem 2 auch wiederum automatisch angefahren werden kann, wozu beispielsweise über eine Eingabeeinrichtung 7, sofern systemseitig vorgesehen, vom Fahrer ein Bestätigungssignal für die automatische Anfahrt zu geben ist, ist es erforderlich, eine Hinderniserkennung vorzusehen, über welche etwaige in der Zwischenzeit vor das eigene Fahrzeug 1 bewegte Hindernisse erkannt werden können, um dann die automatische Anfahrt zu unterbinden. Zu diesem Zweck ist eine Bildaufnahmeeinrichtung 8, z. B. eine digitale Kamera, wie eine CCD-Kamera, vorgesehen, die kontinuierlich mit hinreichender Aufnahmerate Einzelbilder an das Steuergerät 3 liefert, das die Einzelbilder wie nachfolgend noch beschrieben wird auswertet. Vorgesehen ist ferner eine Anzeigeeinrichtung 9, in exemplarischer Form eines Monitors oder Bildschirms, an dem entsprechende Informationen an den Fahrer ausgegeben werden können, sofern beispielsweise ein Hindernis erfasst wird.

Das erfindungsgemäße Verfahren zur Hinderniserkennung beruht darauf, dass die von der Bildaufnahmeeinrichtung 8 gelieferten Einzelbilder seitens des Steuergeräts 3 in einem Differenzbildverfahren verarbeitet und das erzeugte Differenzbild ausgewertet wird. Hierzu wird mit Erfassen des Stillstands des eigenen Kraftfahrzeugs begonnen, ein aktuell aufgenommenes Einzelbild mit einem zeitlich vorher aufgenommenen Einzelbild, das ebenfalls bereits während des Fahrzeugstillstands aufgenommen wurde, im Rahmen einer Bildsubtraktion zu subtrahieren, um ein Differenzbild zu erzeugen. Jedes Einzelbild zeigt die Situation vor dem eigenen Fahrzeug, wie beispielsweise exemplarisch in Fig. 2 gezeigt. Innerhalb dieses Substraktionsvorgangs werden die einzelnen Bildpixelsignale, die in ihrer Gesamtheit das digitale Einzelbild ergeben, pixelweise - vorzugsweise innerhalb vorab definierter Bildbereiche, um nicht die gesamten Bilder voneinander zu subtrahieren - voneinander subtrahiert. Das erhaltene Differenzbild ist das Ergebnis der pixelweise erhaltenen "Restsignale". Idealerweise würde, wenn sich zwischen zwei Einzelbildern keinerlei Änderung ergeben hat, zu jedem Bildpixel als Subtraktionswert "0" ermittelt werden, da in jedem Bild die Signale der einzelnen Pixel gleich wären. Ergibt sich jedoch eine Änderung im Bild, beispielsweise, indem zwischen zwei voneinander zu subtrahierenden Einzelbildern ein Hindernis vor das eigene Fahrzeug gelaufen oder gefahren ist, so ist zwangsläufig der Bildinhalt des später aufgenommenen Einzelbilds anders als der Bildinhalt des zeitlich früher aufgenommenen Einzelbildes. Infolgedessen kommt es zwangsläufig aufgrund der unterschiedlichen Signalwerte innerhalb der einzelnen, geänderten Pixel zu einer entsprechenden Subtraktionsbilddarstellung, die indizierend für eine Bildänderung und damit ein mögliches Hindernis ist.

Fig. 2 zeigt exemplarisch ein Einzelbild E, wie es von der Bildaufnahmeeinrichtung 8 aufgenommen wird. Im Rahmen der Bildverarbeitung wird nicht das Bild in seiner Gesamtheit berücksichtigt, sondern nur der über die strichpunktierte Linie 10 dargestellte, wesentlich kleinere Bildbereich, der unmittelbar das Fahrzeugvorfeld zeigt. Dieser Bildbereich 11 zeigt im Beispiel noch das Heck 12 des vor dem eigenen Fahrzeug 1 stehenden Fahrzeugs 1'. An diesem Heck 12 sind im gezeigten Beispiel noch Beleuchtungseinrichtungen 13 angeordnet, die im Bildbereich 11 gezeigt sind. Würde nun beispielsweise der Fahrer des Fahrzeugs 1 auf die Bremse treten oder diese lösen, so käme es zwangsläufig zu einer Helligkeitsänderung im nachfolgend aufgenommenen Einzelbild, die wiederum im daraufhin erzeugten Differenzbild zu einem entsprechenden Ereignis führen würde. Um zu vermeiden, dass dieses Ereignis, bei dem es sich nicht um ein Hindernis handelt, doch als ein solches Hindernis allein aus der Signaländerung in den zugeordneten Bildbereichen gewertet wird, kann das Fahrzeugheck 12, wie durch die gestrichelte Linie 14 dargestellt ist, zusätzlich aus dem Bildbereich 11 "herausgeschnitten" werden. Dies kann in einem entsprechenden Ausmaskierungsverfahren automatisch seitens des Steuergeräts 3 erfolgen, beispielsweise unter Verwendung eines geeigneten Kantendetektionsalgorithmus, der die Kanten des Fahrzeughecks automatisch detektiert und so dessen Geometrie und Position im Einzelbild E ermitteln kann. In entsprechender Weise wird der Bildbereich 11 in jedem zu verarbeitenden Einzelbild reduziert. Grundsätzlich jedoch wird die Länge des Bildbereichs 11, der im Wesentlichen die Form eines Trapezes hat, so gewählt, dass dieser im Wesentlichen gleich lang oder etwas länger als der Anhalteabstand zum davor befindlichen Fahrzeug 1' ist. Grundsätzlich ist es ferner denkbar, den Bereich 11 in seiner Geometrie dem Straßenverlauf anzupassen, beispielsweise in Abhängigkeit des Lenkradwinkels des eigenen Kraftfahrzeugs, also des Winkels, um welchen das Lenkrad aus der Nullstellung verdreht wurde. Dies ist als Indiz dafür zu werten, dass das Fahrzeug in einer Kurve steht und mit dem Anfahrvorgang eine Kurve befahren wird. Infolgedessen ist es dann zweckmäßig, auch den Hinderniserfassungsbereich 11 dem vermeintlichen Straßenverlauf - der über eine entsprechende Bildanalyse eines Einzelbilds seinerseits erfasst werden kann - entsprechend anzupassen.

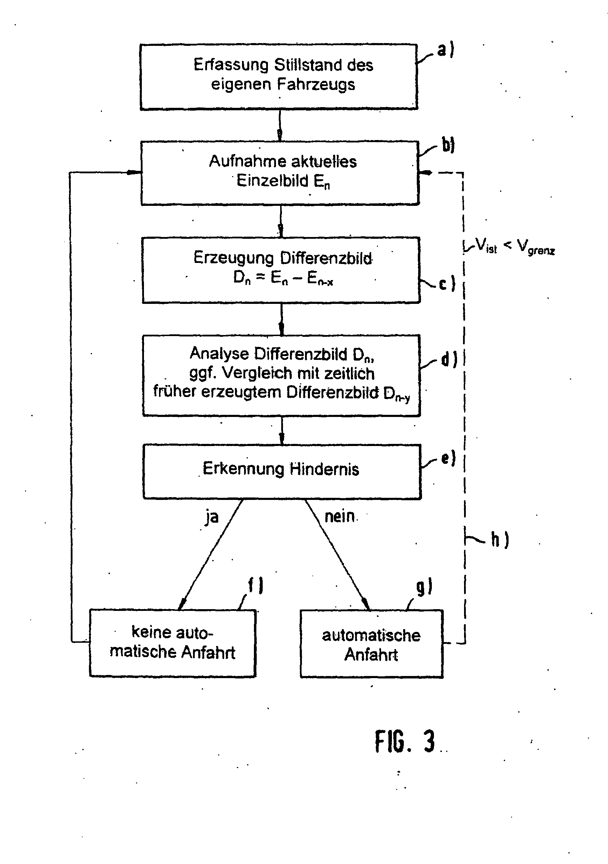

Es sei nun angenommen, wie in Fig. 2 gezeigt ist, dass von der rechten Seite her ein Fußgänger 15 in den Hinderniserfassungsbereich 11 hineinläuft. Dies führt zwangsläufig dazu, dass es zu einer Veränderung der Bildinhalte der nacheinander aufgenommenen Einzelbilder kommt, abhängig von der Bewegung des Fußgängers 15. Dieser wird erfasst, sobald er mit einem Körperteil, beispielsweise dem Bein oder Fuß, in den Hinderniserfassungsbereich hineintritt. Infolge der Änderung der Bildinhalte zwischen zeitlich nacheinander aufgenommenen Bildern kommt es zwangsläufig zu entsprechenden Ereignissen in den Differenzbildern, welche Ereignisse anschließend zur Hinderniserfassung ausgewertet werden. Wie dies dem Grunde nach erfolgt, ist aus Fig. 3 ersichtlich.

Gemäß Fig. 3 wird im Schritt a) zunächst der Stillstand des eigenen Fahrzeugs erfasst. Grundsätzlich ist nun das eigene Fahrzeug im Stande, entweder automatisch oder nach Gabe eines Bestätigungssignals über den Fahrer automatisch anzufahren, wobei jedoch vermieden werden muss, dass es zu einer Kollision mit einem etwaigen nunmehr vorhandenen Hindernis vor dem eigenen Kraftfahrzeug kommt. Zu diesem Zweck werden wie beschrieben nach Erfassung des Stillstands des Fahrzeugs die Einzelbilder in kontinuierlicher Reihenfolge aufgenommen. Beispielsweise kann jedes aktuell aufgenommene Einzelbild Eₙ mit einem unmittelbar davor aufgenommenen Einzelbild subtrahiert werden, um ein Differenzbild Dₙ zu erzeugen. In diesem Fall würde also jedes im Schritt b) aufgenommene Einzelbild verarbeitet werden, siehe Schritt c). Ein Differenzbild wird durch Subtraktion eines zeitlich früheren Einzelbildes vom aktuell aufgenommenen Einzelbild ermittelt, wie durch die Gleichung Dₙ = Eₙ - Eₙ₋ₓ angegeben ist, wobei x eine beliebige Zahl sein kann. Ist x = 1, so wird jedes Einzelbild mit dem unmittelbar davor aufgenommenen Einzelbild rechnerisch verknüpft, ist x = 20, so wird jedes aktuell aufgenommene Einzelbild mit dem 20 Bilder vorher aufgenommenen Einzelbild verknüpft. Denkbar ist es auch, nicht jedes aktuell aufgenommene Einzelbild zu verarbeiten, sondern beispielsweise ebenfalls nur jedes 20ste Einzelbild. Auch ist es denkbar, jedes Einzelbild oder jedes x-ste Einzelbild mit einem festen Vergleichsbild, beispielsweise einem Bild, das unmittelbar nach Erfassung des Stillstands aufgenommen wurde, zu vergleichen. In jedem Fall ist die Ermittlung eines Differenzbilds Dₙ zentral für das erfindungsgemäße Verfahren.

Im Schritt d) wird nun das aktuell ermittelte Differenzbild Dₙ dahingehend analysiert, ob in bestimmten Pixeln entsprechende Signalinhalte gegeben sind, die auf ein Hindernis schließen lassen. Dass nicht jede noch so kleine Änderung innerhalb nur eines einzigen Bildpixels zu einer Hinderniserkennung führt, wird dadurch vermieden, dass ein Hindernis nur dann erkannt wird, wenn zum einen eine Mindestanzahl an zusammenhängenden Bildpixeln eine Änderung zeigen, mithin also im Subtraktionsbild in einem geschlossenen Bildbereich entsprechende "Restsignale" vorhanden sind, zum anderen muss innerhalb dieser Bildpixel das "Restsignal" hinreichend groß sein, mithin also die Signalintensität ausreichend sein. Darüber hinaus kann noch analysiert werden, wie die Geometrie des zusammenhängenden Bildbereichs im Differenzbild ist, in dem hinreichend viele zusammenhängende Pixel mit hinreichendem Differenzsignal gegeben sind, ob diese also eine vorbestimmte Kontur aufweisen, die beispielsweise Gliedmaßen eines Menschen zugeordnet werden können, oder die im Wesentlichen vertikal verlaufen etc. Auch kann ein Differenzbild mit einem oder mehreren zeitlich früher erzeugten Differenzbilden D_{n-y} verglichen werden, um nach Art einer Plausibilitätsprüfung zu ermitteln, ob ein mögliches Hindernis im Differenzbild Dₙ in abgeschwächter oder anderer Weise bereits in einem früheren Differenzbild, zweckmäßigerweise einem oder mehreren unmittelbar davor ermittelten Differenzbildern, gegeben ist oder sich bereits andeutet. Es wird also quasi eine Verlaufskontrolle vorgenommen und überprüft, ob die "Vergangenheit" eines ermittelten Hindernisses plausibel für die aktuelle Hindernisermittlung ist.

Je nachdem, ob im Schritt e) ein Hindernis erkannt wird (Pfeil "ja") oder nicht (Pfeil "nein"), erfolgt im ersteren Fall keine automatische Antwort, das heißt, trotz Erfassung der Anfahrt des vorausfahrenden Kraftfahrzeugs 1' über das Längsführungssystem 2 bzw. die Sensoren 4 in Verbindung mit dem Steuergerät 3 und gegebenenfalls Vorhandenseins eines Bestätigungssignals des Kraftfahrers bleibt das eigene Fahrzeug stehen, da vor ihm ein Hindernis erkannt wurde. Die Hinderniserfassung erfolgt kontinuierlich, das heißt, es wird kontinuierlich überprüft, ob nach wie vor ein Hindernis vorhanden ist. Steht das eigene Fahrzeug beispielsweise an einem Zebrastreifen, und läuft ein Fußgänger über den Zebrastreifen, während das voranfahrende Kraftfahrzeug losgefahren ist, so bleibt das eigene Fahrzeug trotz aktiviertem Anfahrmodus solange stehen, bis der Fußgänger die Straße gequert hat. Erst dann kann die automatische Anfahrt erfolgen, gegebenenfalls nach vorheriger Gabe eines weiteres Bestätigungssignals des Fahrers. Der Fahrer wird beispielsweise über die Anzeigeeinrichtung 9 davon in Kenntnis gesetzt, dass eine automatische Anfahrt (Schritt f) infolge einer Hinderniserkennung nicht möglich ist, er kann hierüber auch zur Gabe eines weiteren Bestätigungssignals zur Fortsetzung der automatischen Fahrt aufgefordert werden.

Ergibt die Endanalyse im Schritt e), dass kein Hindernis vorhanden ist, so erfolgt die automatische Anfahrt, wie im Schritt g) dargestellt ist. Mit Beginn der automatischen Anfahrt gemäß Schritt g) kann der "Automatikmodus" beendet werden, mit ihm auch die Hindemiserfassung. Es besteht jedoch die Möglichkeit, die Hinderniserfassung bei sehr geringer Eigengeschwindigkeit des Fahrzeugs fortzusetzen, wie durch die gestrichelte Linie h) dargestellt ist. Solange die Ist-Geschwindigkeit vᵢₛₜ kleiner einer Grenzgeschwindigkeit V_{grenz} ist, kehrt die Schleife zum Schritt b) zurück, das heißt, es werden fortlaufend immer noch aktuelle Einzelbilder aufgenommen, die anschließend in der zuvor beschriebenen Weise einer Differenzbildermittlung zugrunde gelegt werden. Erst wenn die Ist-Geschwindigkeit gleich oder größer einer Grenzgeschwindigkeit ist, wird die Hinderniserfassung beendet. Diese Verfahrensausgestaltung ist jedoch lediglich optional.

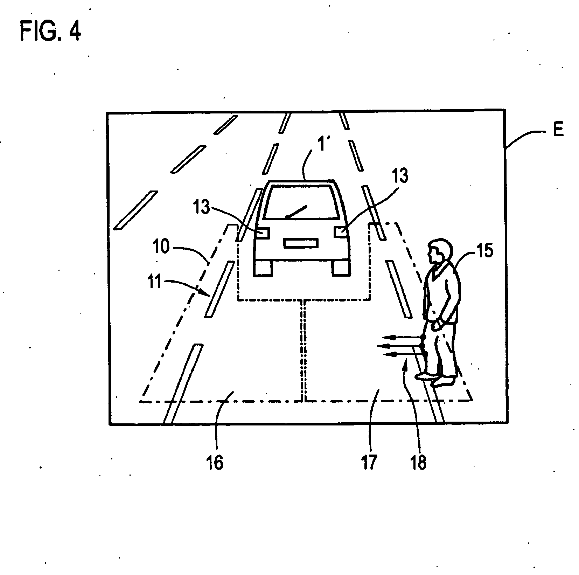

Fig. 4 zeigt schließlich die Hinderniserfassung anhand einer Ermittlung des optischen Flusses, wozu das Steuergerät 3 entsprechend ausgerichtet ist und über die geeigneten Verarbeitungs- und Auswertealgorithmen verfügt, um die von der Bildaufnahmeeinrichtung 8 gelieferten Bilder auszuwerten. Hierbei werden Bildänderungen bzw. Verschiebungen von Bildinformationen vektoriell erfasst und das sich ergebende Vektorfeld ausgewertet. Fig. 4 zeigt wie bereits Fig. 2 exemplarisch ein Einzelbild E, wie es von der Bildaufnahmeeinrichtung 8 aufgenommen wird. Im Rahmen der Bildverarbeitung wird auch hier nicht das Bild in seiner Gesamtheit berücksichtigt, sondern nur der über die strichpunktierte Linie 10 dargestellte, wesentlich kleinere Bildbereich, der unmittelbar das Fahrzeugvorfeld zeigt. Auch hier ist das Fahrzeugheck "ausmaskiert", damit die dortigen Leuchten 13 oder andere Kanten etc. nicht zu Fehlerfassungen führen. Grundsätzlich jedoch wird die Länge des Bildbereichs 11, der im Wesentlichen die Form eines Trapezes hat, so gewählt, dass dieser im Wesentlichen gleich lang oder etwas länger als der Anhalteabstand zum davor befindlichen Fahrzeug 1' ist. Grundsätzlich ist es auch hier denkbar, den Bereich 11 in seiner Geometrie dem Straßenverlauf anzupassen, beispielsweise in Abhängigkeit des Lenkradwinkels des eigenen Kraftfahrzeugs, also des Winkels, um welchen das Lenkrad aus der Nullstellung verdreht wurde. Dies ist als Indiz dafür zu werten, dass das Fahrzeug in einer Kurve steht und mit dem Anfahrvorgang eine Kurve befahren wird. Infolgedessen ist es dann zweckmäßig, auch den Hinderniserfassungsbereich 11 dem vermeintlichen Straßenverlauf - der über eine entsprechende Bildanalyse eines Einzelbilds seinerseits erfasst werden kann - entsprechend anzupassen.

Der Bereich, der über die Linie 10 definiert wird, ist hier jedoch zweigeteilt, so das sich zwei Bildbereiche 16 und 17 ergeben. Der Bereich 16 ist der linken Bildhälfte zugeordnet, der Bereich 17 der rechten Bildhälfte. In dem linken Bildbereich 16 werden nur Hindernisse detektiert, die sich von links nach rechts bewegen, im rechten Bildbereich nur Hindernisse, die sich von rechts nach links bewegen. Die Bewegungs- und damit die Hinderniserkennung erfolgt durch Betrachtung der zeitlichen Verschiebung von Bildinformationen der einzelnen Bildpunkte, aus denen sich das jeweilige Einzelbild zusammensetzt. Es werden zeitlich nacheinander aufgenommene Bilder bzw. deren Bildpunkte, die in den jeweiligen Bereichen 16 und 17 liegen, betrachtet. Zu jedem Bildpunkt wird ermittelt, ob sich die punktbezogene Bildinformation verschoben hat. Dies wird in Form eines die Bewegungsrichtung anzeigenden Vektors erfasst, so dass sich bezogen auf die Vielzahl der überprüften und sich gegebenenfalls verändernden Bildpunkte ein Vektorfeld ergibt, das eine bestimmte Richtung definiert bzw. dessen Vektoren in eine Vorzugsrichtung weisen, wenn sich das Objekt im wesentlichen quer zur Fahrzeuglängsachse bewegt. Die Vektoren geben also eine Richtungsinformation, aus der Vektorlänge kann die Geschwindigkeitsinformation abgeleitet werden.

Wie in Fig. 4 gezeigt ist, bewegt sich ein Fußgänger 15 von rechts in den Bereich 17 hinein, was anhand mehrere Einzelbilder aufgenommen wird. Diese Bildsequenz wird nun hinsichtlich des optischen Flusses der Bildpunktveränderungen bzw. der Informationsverschiebung zwischen jeweils zwei Einzelbildern ausgewertet und die pixelweisen zugehörigen Vektoren 18, die die Richtung und Geschwindigkeit der Informationsverschiebung zweidimensional beschreiben, ermittelt. In Fig. 4 sind exemplarisch drei Bildpunkte und deren Vektoren 18, die sich durch Vergleich mit einem späteren Einzelbild ermitteln lassen, dargestellt. Diese zeigen im wesentlichen horizontal nach links, nachdem sich das Objekt nach links bewegt. Bevorzugt werden Bildpunkte im Bereich von Objektkanten, die gegebenenfalls mittels eines Kantendetektionsalgoritmus ermittelt werden, berücksichtigt, wie in Fig. 4 gezeigt, wo die Bildpunkte an der Kante des im Bild gezeigten Beins der Person 15 liegen. Anhand der Vielzahl der ermittelten Vektoren (es verschieben sich natürlich sehr viele Bildpunkte bzw. Bildpunktinformationen, die Figur zeigt exemplarisch nur drei Vektoren 18) ergibt sich ein Vektorfeld, anhand welchem sehr exakt jede Bewegung erkannt und damit ein Hindernis ermittelt werden kann. Würde sich das Objekt von links kommend in den linken Bereich 16 hineinbewegen, so würden die Vektoren nach rechts zeigen, das Vektorfeld hätte also eine nach rechts zeigende Richtungsinformation.

## Patentansprüche

1. Verfahren zur automatischen Längsführung eines Kraftfahrzeugs mittels eines längsführenden Fahrerassistenzsystems mit Stop&Go-Funktion umfassend eine Erfassungseinrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand gebremst und bei Erfassung der erneuten Anfahrt des vorausfahrenden Fahrzeugs gegebenenfalls in Abhängigkeit eines vom Fahrer über eine Eingabeeinrichtung gebbaren Bestätigungssignals automatisch wieder angefahren wird, wobei zumindest ab dem Zeitpunkt des Stillstands des Kraftfahrzeugs kontinuierlich das Fahrzeugvorfeld mittels einer Überwachungseinrichtung auf etwaige im Fahrzeugvorfeld befindliche Hindernisse überwacht wird, welche Überwachungseinrichtung eine kontinuierlich das Fahrzeugvorfeld zeigende Einzelbilder liefernde Bildaufnahmeeinrichtung umfasst, wobei zur Hinderniserfassung entweder Differenzbilder aus jeweils einem ersten Einzelbild und einem zeitlich danach aufgenommenen zweiten Einzelbild erzeugt und ausgewertet werden, oder wobei zur Hinderniserfassung die Vektoren des optischen Flusses der Bildinformation zumindest eines Teils der Bildpunkte zweier zeitlich nacheinander aufgenommener, sich aus Bildpunkten zusammensetzender Einzelbilder ermittelt und ausgewertet werden,
**dadurch gekennzeichnet,**
**dass** bei der Differenzbilderstellung bei Erfassung eines entgegenkommenden oder überholenden anderen Fahrzeugs die Verarbeitung der Einzelbilder unterbrochen und erst nach erfolgter Vorbeifahrt des erfassten Fahrzeugs wieder fortgesetzt wird, oder dass bei Betrachtung des optischen Flusses den Einzelbildern mehrere definierte Bildbereiche zugeordnet sind, in denen die Ermittlung des optischen Flusses erfolgt, wobei ein erster Bildbereich definiert ist, in dem ein Hindernis dann erkannt wird, wenn die Vektoren des optischen Flusses von links nach rechts gerichtet sind, und dass ein zweiter Bildbereich definiert ist, in dem ein Hindernis dann erkannt wird, wenn die Vektoren des optischen Flusses von rechts nach links gerichtet sind.

2. Verfahren nach Anspruch 1,
**dadurch gekennzeichnet,**
**dass** zur Differenzbilderstellung jedes oder jedes n-te neu aufgenommene Einzelbild von dem unmittelbar davor aufgenommenen Einzelbild oder einem definierten Vergleichs-Einzelbild, gegebenenfalls einem (n-x)-ten Einzelbild subtrahiert wird.

3. Verfahren nach Anspruch 1 oder 2,
**dadurch gekennzeichnet,**
**dass** ein Differenzbild hinsichtlich der Größe der pixelweisen Signaldifferenzen und der Anzahl der pixelweisen Signaldifferenzen analysiert wird, wobei ein Hindernis dann erkannt wird, wenn eine Mindestanzahl von pixelweisen Signaldifferenzen bei gleichzeitiger Mindestgröße der jeweiligen Signaldifferenz gegeben ist.

4. Verfahren nach Anspruch 3,
**dadurch gekennzeichnet,**
**dass** ein Hindernis dann erkannt wird, wenn die entsprechenden Bildpixel zusammenhängen.

5. Verfahren nach Anspruch 3 oder 4,
**dadurch gekennzeichnet,**
**dass** jedes Differenzbild mit wenigstens einem, vorzugsweise mehreren davor erzeugten Differenzbildern dahingehend verglichen wird, ob die im aktuell erzeugten Differenzbild ermittelten relevanten pixelweisen Signaldifferenzen in den älteren Differenzbildern in vergleichbaren Bildbereichen gegeben sind, wobei ein Hindernis dann erkannt wird, wenn eine einen vorgegebenen Übereinstimmungsgrad übersteigende Übereinstimmung ermittelt wird.

6. Verfahren nach Anspruch 4 oder 5,
**dadurch gekennzeichnet,**
**dass** eine Analyse der Geometrie des zusammenhängenden Bildpixelbereichs zur Ermittlung einer charakteristischen Form und/oder Ausrichtung des Bereichs im Bild erfolgt.

7. Verfahren nach einem der vorangehenden Ansprüche,
**dadurch gekennzeichnet,**
**dass** in jedem verarbeiteten Einzelbild ein in seiner Bildlage und Form definierter Bildbereich ausgewählt und nur dieser jeweilige Bildbereich der Verarbeitung zu Grunde gelegt wird.

8. Verfahren nach Anspruch 1,
**dadurch gekennzeichnet,**
**dass** der optische Fluss zwischen jedem oder jedem n-ten neu aufgenommenen Einzelbild und dem unmittelbar davor aufgenommenen Einzelbild oder einem definierten Vergleichs-Einzelbild, gegebenenfalls einem (n-x)-ten Einzelbild ermittelt wird.

9. Verfahren nach Anspruch 1 oder 8,
**dadurch gekennzeichnet,**
**dass** als Bildpunktinformationen solche von Objektkanten ausgewertet werden.

10. Verfahren nach einem der vorangehenden Ansprüche,
**dadurch gekennzeichnet,**
**dass** ein Bildbereichsabschnitt, in dem die Silhouette des vorausfahrenden Fahrzeugs gezeigt ist, bei der Ermittlung und Auswertung des optischen Flusses nicht berücksichtigt wird.

11. Verfahren nach einem der vorangehenden Ansprüche,
**dadurch gekennzeichnet,**
**dass**, falls der optische Fluss betrachtet wird, bei Erfassung eines entgegenkommenden oder überholenden anderen Fahrzeugs die Verarbeitung der Einzelbilder unterbrochen und erst nach erfolgter Vorbeifahrt des erfassten Fahrzeugs wieder fortgesetzt wird.

12. Verfahren nach einem der vorangehenden Ansprüche,
**dadurch gekennzeichnet,**
**dass** die Einzelbildaufnahme und Verarbeitung derselben zur Ermittlung und Auswertung des optischen Flusses auch noch erfolgt, wenn das eigene Kraftfahrzeug wieder angefahren ist, bis eine Grenzgeschwindigkeit erreicht ist.

13. Kraftfahrzeug, umfassend ein es längsführendes Fahrerassistenzsystem mit Stop&Go-Funktion umfassend eine Erfassungseinrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand gebremst und bei Erfassung der erneuten Anfahrt des vorausfahrenden Fahrzeugs gegebenenfalls in Abhängigkeit eines vom Fahrer über eine Eingabeeinrichtung gebbaren Bestätigungssignals automatisch wieder angefahren wird, wobei zumindest ab dem Zeitpunkt des Stillstands des Kraftfahrzeugs kontinuierlich das Fahrzeugvorfeld mittels der oder einer Erfassungseinrichtung auf etwaige im Fahrzeugvorfeld befindliche Hindernisse überwacht wird, ausgebildet zur Durchführung des Verfahrens nach einem der vorangehenden Ansprüche.

## Claims

1. Method for the automatic longitudinal guidance of a motor vehicle by means of a longitudinally guiding driver assistance system with stop-and-go functionality, comprising an acquisition device for acquiring information relating to a vehicle driving in front, via which driver assistance system the motor vehicle is automatically braked to a standstill as a function of the information acquired by means of the acquisition device, and automatically starts off again upon acquisition of the renewed start of the vehicle travelling in front, possibly as a function of an actuating signal which can be given by the driver via an input device, the area in front of the motor vehicle being monitored continuously, at least from the moment of its standstill, for any obstacles located in the area in front of it by means of a monitoring device which comprises an image recording device supplying individual images showing the area in front of the vehicle, obstacles being acquired either by producing images from in each case a first individual image and a second individual image recorded, thereafter in time and evaluating said differential images, or by determining the vectors of the optical flux of image information of at least some of the pixels of two individual images recorded sequentially in time and composed of pixels, and said individual images are evaluated,
**characterized in that**,
during the production of differential images as other, oncoming or overtaking vehicles are being acquired, the processing of the individual images is interrupted and is not continued again until after the acquired vehicle has passed by, or **in that** during viewing of the optical flux the individual images are assigned a plurality of defined image areas in which the determination of the optical flux is performed, a first image area being defined in which an obstacle is detected whenever the vectors of the optical flux are directed from left to right, and **in that** a second image area is defined in which an obstacle is detected whenever the vectors of the optical flux are directed from right to left.

2. Method according to Claim 1,
**characterized in that**
in order to produce differential images each, or each nth newly recorded individual image is subtracted from the individual image recorded immediately therebefore, or from a defined reference individual image, possibly from an (n-x)th individual image.

3. Method according to Claim 1 or 2,
**characterized in that**
a differential image is analyzed with regard to the magnitude of the pixelwise signal differences and the number of the pixelwise signal differences, an obstacle being detected whenever a minimum number of pixelwise signal differences occurs at the same time as a minimum magnitude of the respective signal difference.

4. Method according to Claim 3,
**characterized in that**
an obstacle is detected whenever the corresponding image pixels are coherent.

5. Method according to Claim 3 or 4,
**characterized in that**
each differential image is compared with at least one, preferably a plurality of previously produced differential images as to whether the relevant pixelwise signal differences determined in the currently produced differential image occur in the older differential images in the comparable image areas, an obstacle being detected whenever a correspondence is determined which exceeds a prescribed degree of correspondence.

6. Method according to Claim 4 or 5,
**characterized in that**
the geometry of the coherent image pixel area is analyzed in order to determine a characteristic shape and/or alignment of the area in the image.

7. Method according to one of the preceding claims,
**characterized in that**
an image region defined as to its image position and shape is selected in each processed individual image, and only this respective image area is used as a basis for processing.

8. Method according to Claim 1,
**characterized in that**
the optical flux between each, or each nth newly recorded individual image and the individual image recorded immediately therebefore, or a defined individual reference image, possibly an (n-x)th individual image, is determined.

9. Method according to Claim 1 or 8,
**characterized in that**
the pixel information evaluated is that of object edges.

10. Method according to one of the preceding claims,
**characterized in that**
an image area section in which the silhouette of the vehicle travelling in front is shown is not taken into account in determining and evaluating the optical flux.

11. Method according to one of the preceding claims,
**characterized in that**
if the optical flux is being viewed, the processing of the individual images is interrupted during acquisition of another, oncoming or overtaking vehicle and is not continued again until the detected vehicle has passed.

12. Method according to one of the preceding claims,
**characterized in that**
the recording of individual images and the processing of the same is also still performed in order to determine and evaluate the optical flux when one's own motor vehicle starts off again until a speed limit is reached.

13. Motor vehicle, comprising a longitudinally guiding driver assistance system with stop-and-go functionality, comprising an acquisition device for acquiring information relating to a vehicle driving in front, via which driver assistance system the motor vehicle is automatically braked to a standstill as a function of the information acquired by means of the acquisition device, and automatically starts off again upon acquisition of the renewed start of the vehicle travelling in front, possibly as a function of an actuating signal which can be given by the driver via an input device, the area in front of the motor vehicle being monitored continuously, at least from the moment of its standstill, for any obstacles located in the area in front of it by means of the or a monitoring device, designed for carrying out the method according to one of the preceding claims.

## Revendications

1. Procédé de guidage longitudinal automatique d'un véhicule automobile à l'aide d'un système d'assistance au conducteur de guidage longitudinal avec fonction stop&go, comprenant un dispositif de détection pour détecter des informations concernant un véhicule circulant en avant, le véhicule automobile, à l'aide dudit système d'assistance au conducteur, en fonction des informations détectées au moyen du dispositif de détection, étant automatiquement freiné jusqu'à l'arrêt et à la détection du redémarrage du véhicule en avant, étant automatiquement redémarré, éventuellement en fonction d'un signal de commande pouvant être donné par le conducteur par le biais d'un dispositif d'entrée, au moins à partir de l'instant de l'arrêt du véhicule automobile le champ en avant du véhicule étant surveillé en continu au moyen d'un dispositif de surveillance pour détecter des obstacles se trouvant éventuellement dans le champ en avant du véhicule, lequel dispositif de surveillance comprenant un dispositif d'enregistrement d'image fournissant en continu des images individuelles montrant le champ en avant du véhicule, et pour détecter des obstacles, soit des images différentielles étant produites et analysées à partir d'une première image individuelle et d'une deuxième image individuelle prise plus tard, soit, pour la détection des obstacles, les vecteurs du flux optique des informations d'image d'au moins une partie des points image de deux images individuelles prise l'une après l'autre, se composant de points image, étant détectés et analysés,
**caractérisé en ce que**
dans le cas de la création d'images différentielles lors de la détection d'un autre véhicule venant en sens inverse ou en train de doubler, le traitement des images individuelles est interrompu et n'est repris qu'après le passage du véhicule détecté, ou **en ce que** lors de l'observation du flux optique, on associe aux images individuelles plusieurs régions d'image définies, dans lesquelles la détermination du flux optique a lieu, une première région d'image étant définie, dans laquelle un obstacle est détecté quand les vecteurs du flux optique sont orientés de gauche à droite, et **en ce qu'**une deuxième région d'image est définie, dans laquelle un obstacle est détecté quand les vecteurs du flux optique sont orientés de droite à gauche.

2. Procédé selon la revendication 1,
**caractérisé en ce que**
pour la création d'images différentielles, chaque nouvelle image individuelle enregistrée ou chaque n-ième nouvelle image individuelle enregistrée est soustraite de l'image individuelle prise immédiatement avant, ou d'une image individuelle de comparaison définie, éventuellement d'une (n-x)-ième image individuelle.

3. Procédé selon la revendication 1 ou 2,
**caractérisé en ce**
**qu'**une image différentielle est analysée en termes de mesure des différences de signaux par pixels, un obstacle étant ainsi reconnu si un nombre minimum de différences de signaux par pixels est présent, pour une mesure minimale simultanée de la différence de signaux respective.

4. Procédé selon la revendication 3,
**caractérisé en ce**
**qu'**un obstacle est détecté si les pixels image correspondants coïncident.

5. Procédé selon la revendication 3 ou 4,
**caractérisé en ce que**
chaque image différentielle est comparée avec au moins une, et de préférence plusieurs images différentielles produites préalablement, afin de savoir si les différences de signaux par pixel pertinentes détectées dans l'image différentielle actuellement produite sont présentes dans les images différentielles plus anciennes dans des régions d'image comparable, un obstacle étant alors reconnu si l'on détecte une coïncidence dépassant un degré de coïncidence prédéfini.

6. Procédé selon la revendication 4 ou 5,
**caractérisé en ce que**
l'on effectue une analyse de la géométrie de la région de pixels image coïncidents pour déterminer une forme caractéristique et/ou une orientation caractéristique de la région dans l'image.

7. Procédé selon l'une quelconque des revendications précédentes,
**caractérisé en ce que**
dans chaque image individuelle traitée, on sélectionne une région d'image de position d'image et de forme définie et l'on ne tient compte que de cette région d'image respective pour le traitement.

8. Procédé selon la revendication 1,
**caractérisé en ce que**
l'on détermine le flux optique entre chaque nouvelle image individuelle ou chaque nouvelle n-ième image individuelle enregistrée et l'image individuelle enregistrée juste avant ou une image individuelle de comparaison définie, éventuellement une (n-x)-ième image individuelle.

9. Procédé selon la revendication 1 ou 8,
**caractérisé en ce que**
l'on analyse en tant qu'informations de point image celles provenant de bords d'objets.

10. Procédé selon l'une quelconque des revendications précédentes,
**caractérisé en ce que**
l'on ne tient pas compte d'une portion de région d'image dans laquelle la silhouette du véhicule circulant devant est illustrée, lors de la détection et de l'analyse du flux optique.

11. Procédé selon l'une quelconque des revendications précédentes,
**caractérisé en ce que**
si l'on considère le flux optique lors de la détection d'un autre véhicule venant en sens inverse ou en train de doubler, le traitement des images individuelles est interrompu et n'est repris qu'après le passage du véhicule détecté.

12. Procédé selon l'une quelconque des revendications précédentes,
**caractérisé en ce que**
l'enregistrement des images individuelles et leur traitement pour déterminer et analyser le flux optique a lieu aussi lorsque le véhicule automobile propre a redémarré, jusqu'à ce qu'une vitesse limite soit atteinte.

13. Véhicule automobile, comprenant un système d'assistance au conducteur de guidage longitudinal avec fonction stop&go, comprenant un dispositif de détection pour détecter des informations concernant un véhicule circulant en avant, le véhicule automobile, à l'aide dudit système d'assistance au conducteur, en fonction des informations détectées au moyen du dispositif de détection, étant automatiquement freiné jusqu'à l'arrêt et à la détection du redémarrage du véhicule en avant, étant automatiquement redémarré, éventuellement en fonction d'un signal de commande pouvant être donné par le conducteur par le biais d'un dispositif d'entrée, au moins à partir de l'instant de l'arrêt du véhicule automobile le champ en avant du véhicule étant surveillé en continu au moyen du ou d'un dispositif de surveillance pour détecter des obstacles se trouvant éventuellement dans le champ en avant du véhicule, conçu pour mettre en oeuvre le procédé selon l'une quelconque des revendications précédentes.
